(19) Europäisches Patentamt
European Patent Office
Office européen des brevets

(11) Veröffentlichungsnummer : **0 119 618**
**B1**

(12) **EUROPÄISCHE PATENTSCHRIFT**

(45) Veröffentlichungstag der Patentschrift : **09.09.87**

(51) Int. Cl.[4] : **G 01 N 21/59**

(21) Anmeldenummer : **84102951.5**

(22) Anmeldetag : **16.03.84**

(54) **Optisches Transmissionsmessgerät.**

(30) Priorität : **18.03.83 DE 3309838**

(43) Veröffentlichungstag der Anmeldung : **26.09.84 Patentblatt 84/39**

(45) Bekanntmachung des Hinweises auf die Patenterteilung : **09.09.87 Patentblatt 87/37**

(84) Benannte Vertragsstaaten : **DE FR GB IT NL SE**

(56) Entgegenhaltungen :
**FR-A- 2 302 539**
**GB-A- 2 023 873**
**US-A- 3 617 756**
**US-A- 3 857 641**

(73) Patentinhaber : **Erwin Sick GmbH Optik-Elektronik**
**Sebastian-Kneipp-Strasse 1**
**D-7808 Waldkirch (DE)**

(72) Erfinder : **Fetzer, Günter**
**Sonnhalde 97a**
**D-7803 Gundelfingen (DE)**

(74) Vertreter : **Dipl.-Phys.Dr. Manitz Dipl.-Ing., Dipl.-Wirtsch. Finsterwald Dipl.-Chem.Dr. Heyn Dipl.-Phys. Rotermund Morgan, B.Sc.(Phys.)**
**Robert-Koch-Strasse 1**
**D-8000 München 22 (DE)**

**EP 0 119 618 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein optisches Transmissionsmeßgerät, insbesondere zur Rauchdichte- oder Sichtweitemessung, mit einer Lichtquelle, einer dahinter befindlichen Frontlinsenanordnung, welche ein Lichtbündel durch eine Meßstrecke lenkt, einen am anderen Ende der Meßstrecke angeordneten Reflektor, welcher das Lichtbündel zur Frontlinsenanordnung zurückführt, Mitteln zum mehrfachen Hin- und Herführen von Licht zwischen der Frontlinsenanordnung und dem Reflektor und einer Lichtempfangsanordnung, auf der über die Frontlinsenanordnung von der Meßstrecke kommendes Licht konzentriert wird und die ein dem auftreffenden Licht entsprechendes elektrisches Signal abgibt (Siehe GB-A-2 023 873).

Derartige, auch als Transmissiometer bezeichnete optische Meßgeräte beinhalten im allgemeinen eine Lichtquelle, ein optisches System zur Erzeugung eines über die Meßstrecke laufenden Lichtbündels, einen von diesem Lichtbündel beaufschlagten Umkehrreflektor, sowie einen Strahlteiler, welcher das zurückgeworfene Licht einem photoelektrischen Empfänger zuleitet. Da mit diesen Transmissometern Absolutwerte gemessen werden sollen, ist es notwendig, ein Gerät zu schaffen, bei dem sämtliche Driften, z. B. durch Verschmutzung der Optik, Alterung der Lichtquelle, Temperatureinflüsse auf den Photoempfänger, Dejustage des Optikkopfes und des Reflektors etc. kompensiert werden.

Bei bekannten optischen Meßgeräten für die Transmission (DE-A-23 03 040, DE-A-19 11 310, DE-A-25 08 860) wird die Gerätestabilität dadurch erreicht, daß ein Nullpunktreflektor zyklisch in den Meßstrahlengang eingeschwenkt wird. Dieser Nullpunktreflektor befindet sich sehr nahe beim Optikkopf und reflektiert deshalb das Licht, ohne daß es die Meßstrecke zum eigentlichen Meßreflektor durchlaufen hat. Der Photoempfänger erhält somit bei eingeschwenktem Nullpunktreflektor einen Lichtstrom, wie er bei einer ungedämpften Meßstrecke auftreten würde.

Die dem Empfänger nachgeschaltete elektronische Auswerteschaltung kann somit sämtliche Langzeitdriften des Systems kompensieren und damit Meßfehler ausschalten. Ein elektronischer Quotientenbildner ist aus der genannten DE-A-2 303 040 bekannt.

Es sind ferner Systeme bekannt, bei denen zusätzlich zum Nullpunktreflektor, der in der Regel in einem Zyklus von mehreren Minuten eingeschwenkt wird, eine Innenreferenz mit einer Frequenz von einigen Hertz erzeugt wird, um kurzzeitige Driften ebenfalls zu eliminieren. Diese bekannten Verfahren setzen aber voraus, daß entweder der Nullpunktreflektor und der Meßreflektor bei gegebenem Abstand des Meßreflektors auf rauchfreier Strecke auf gleiche Reflexionswerte abgeglichen werden müssen oder die Photostromverhältnisse von Nullpunktreflektor und Meßreflektor bekannt sind. In jedem Fall dürfen sich die Photostromverhältnisse im Laufe der Zeit nicht verändern. Wenn also der Nullpunktreflektor und der Meßreflektor ihr Reflexionsvermögen aus irgendwelchen Gründen verändern, kann dies bei den bekannten Anordnungen nicht erkannt werden. Weiter wird nicht erkannt, wenn z. B. aufgrund von mechanisch-thermischem Verzug das über die Meßstrecken laufende Lichtbündel sich relativ zum Meßreflektor verschiebt. Dem kann man zwar bei den bekannten Systemen dadurch begegnen, daß der Meßreflektor homogen überstrahlt wird und deshalb immer eine im wesentlichen gleiche Lichtmenge vom Meßreflektor erfaßt und zurückreflektiert. Allerdings ist hierzu eine gute Homogenität des Lichtbündels erforderlich, welche nicht immer ohne weiteres verwirklicht werden kann.

Aus diesem Grunde ist es bei allen bekannten Systemen immer wieder erforderlich, diese auf rauchfreier Strecke bezüglich der Reflexionsverhältnisse von Nullpunktreflektor und Meßreflektor zu überprüfen, was einen erheblichen Aufwand für die Wartung derartiger Geräte darstellt.

Das Ziel der vorliegenden Erfindung besteht nun darin, ein optisches Transmissionsmeßgerät der eingangs genannten Gattung zu schaffen, bei dem jedwedes Langzeitdriften durch sämtliche obengenannten Einflüsse automatisch ausgeschaltet wird, ohne daß es eines Nullpunktreflektors bedarf und ohne daß das sich möglicherweise über längere Zeiten verändernde Reflexionsverhalten des Meßreflektors einen nachteiligen Einfluß auf die Messung ausübt.

Zur Lösung dieser Aufgabe sieht die Erfindung vor, daß Reflexions- und Abbildungsmittel (17, 20, 21) vorgesehen, sind, die bewirken, daß das von der Frontlinsenanordnung ausgehende Licht in zumindest zwei Teilbündel unterteilt ist, welche die Meßstrecke zwischen der Frontlinsenanordnung und dem Reflektor unterschiedlich oft durchlaufen, bevor sie die Lichtempfangsanordnung erreichen, und daß die von den beiden Teilbündeln herrührenden, entsprechenden elektrischen Ausgangssignale der Lichtempfangsanordnung einer elektronischen Auswerteschaltung zugeführt sind, welche die beiden Signale durch Quotientenbildung so verknüpft, daß das nicht durch Änderungen der Transmission auf der Meßstrecke hervorgerufene Driften eliminiert ist.

Besonders vorteilhaft ist es, wenn sowohl einmal am Reflektor reflektiertes Licht als auch ein- oder mehrfach, insbesondere sechsfach zwischen der Frontlinsenanordnung und dem Reflektor hin- und herlaufendes Licht durch die Frontlinsenanordnung auf die Lichtempfangsanordnung gelenkt ist.

Auf diese Weise kann die im Lambert-Beerschen Gesetz vorkommende Grundhelligkeit bei freier Meßstrecke vollständig eleminiert werden, so daß nur noch die Transmission oder ggfs. die Extinktion völlig unbeeinflußt von etwaigen Driften gemessen werden kann.

Verschiedene optische Anordnungen zur Verwirklichung einer Mehrfachreflexion zwischen Frontlinsenanordnung und Meßreflektor sind aus der DE-PS 25 08 860 bekannt. All diese bekannten

Mehrfachreflexionsanordnungen können für die Zwecke der vorliegenden Erfindung nutzbar gemacht werden. Wichtig ist nur, daß auf der Frontlinsenanordnung nebeneinander zwei Bilder der Lichtquelle (Spalt oder Lampenwendel) erzeugt werden, von denen das eine auf einen Retroreflektor wie ein Beckprisma fällt und somit im Mehrfachreflexionsstrahlengang liegt, während das andere auf eine solche Stelle der Frontlinsenanordnung fällt, wo es durch diese hindurch zur Lichtempfangsanordnung austreten kann.

Eine vorteilhafte praktische Ausführungsform kennzeichnet sich dadurch, daß die Frontlinsenanordnung ein Objektiv sowie Reflexionsmittel zum teilweisen Zurückreflektieren von der Meßstrecke kommenden Licht aufweist.

Weiter ist es vorteilhaft, wenn das Reflexionsmittel neben der optischen Achse des Objektivs angeordnet ist, sich jedoch nicht bis zum Rand des Objektivs erstreckt, so daß dort das mehrfach, insbesondere sechsfach, durch die Meßstrecke gelaufene Lichtbündel durch das Objektiv zur Lichtempfangsanordnung hindurchtreten kann.

Das Reflexionsmittel soll ein aus einem einzigen Element bestehender Retroreflektor, insbesondere ein Beckprisma sein.

Prinzipiell kann die Lichtempfangsanordnung zwei Photoempfänger aufweisen, von denen jeder eines der Teilbündel empfängt. Die Photoempfänger wären dann an die elektronische Auswerteschaltung anzuschließen, wo durch Quotientenbildung oder sonstige mathematische Verknüpfungen die Grundhelligkeit des Lambert-Beerschen Gesetzes eliminiert wird. Diese Ausführung setzt jedoch voraus, daß die beiden Photoempfänger sich bezüglich Temperatur und Alterns gleich verhalten.

Daher ist es bevorzugt, wenn die Beiden Teilbündel zeitlich nacheinander abwechselnd auf einen einzigen Photoempfänger fallen, wobei dies z. B. durch eine umlaufende Sektorenblende verwirklicht werden kann. Auch in diesem Falle ist es möglich, durch Synchronisierung der elektronischen Auswerteschaltung mit der umlaufenden Sektorenblende die beiden Empfangssignale so auszuwerten, daß alle Drifteinflüsse elminiert sind.

Weiter sieht eine baulich bevorzugte Ausführungsform vor, daß der anderen Hälfte des Objektivs erste Lichtablenkmittel, insbesondere ein optischer Keil, zugeordnet sind, welche dem einfach reflektierten Lichtbündel eine Ablenkung vermitteln, die die Versetzung des mehrfach reflektierten Teilbündels kompensiert. Auf diese Weise können sowohl das einfach als auch das mehrfach reflektierte Lichtbündel auf dem gleichen Photoempfänger konzentriert werden, obwohl diese Lichtbündel zunächst durch die Meßreflektoranordnung senkrecht zur optischen Achse auseinandergezogen waren.

Eine bevorzugte Ausbildung des Meßreflektors kennzeichnet sich dadurch, daß der Reflektor aus einem das gesamte Meßlicht erfassenden Retroreflexionselement einer davor angeordneten Linse, deren Brennpunkt sich im Bereich der Frontlinsenanordnung befindet, und zweiten Lichtablenkmitteln besteht, welche die von beiden Teilbündeln auf der Frontlinsenanordnung entworfenen Bilder trennen. Das Retroreflexionselement kann hierbei ebenfalls ein Beckprisma sein, welches die eintretenden Lichtstrahlen in zur optischen Achse symmetrischer Weise versetzt.

Die Lichtablenkmittel können z. B. aus einem Keil in einer Hälfte der Linse bestehen, oder sie werden durch Anordnung zweier Halblinsen in einem Abstand voneinander verwirklicht.

Die Erfindung wird im folgenden beispielsweise anhand der Zeichnung beschrieben, deren einzige Figur eine schematische Wiedergabe des optischen Strahlenganges eines optischen Transmissionsmeßgerätes und der darin befindlichen elektronischen Auswerteschaltung darstellt.

Nach der Zeichnung bildet ein Sendekondensor 10 die Wendel einer Lampe 23 über einen eine 90°-Ablenkung hervorrufenden Vollspiegel 24, der nur einen Bruchteil, und zwar etwa die Hälfte, des Empfangsstrahlenbündels einnimmt und der auf der optischen Achse 22 angeordnet ist, in der Mitte eines Frontobjektivs 16 ab. Mittels des Vollspiegels 24 wird also eine geometrische Strahlenteilung durchgeführt.

Das Frontobjektiv 16 seinerseits bildet den Sendekondensor 10 in die Ebene einer Meßreflektoranordnung 13 ab, die sich auf der optischen Achse 22 am entgegengesetzten Ende einer Meßstrecke 11 wie die Frontlinse 16 befindet.

Die Frontlinse 16 bildet zusammen mit einem Beckprisma 17, das etwas seitlich von dem durch den Vollspiegel 24 auf die Frontlinse 16 geworfenen Lichtbündel angeordnet ist, und einem optischen Keil 18 eine Frontlinsenanordnung 12, welche die Aufspaltung des in die Frontlinse 16 eintretenden Lichtbündels in ein einfach und ein sechsfach reflektiertes Teilbündel gestattet.

Hierzu ist das Beckprisma 17 in der in der Zeichnung oberen Hälfte der Frontlinse 16 vor dieser angeordnet, und zwar derart, daß von der Fronlinse 16 zum Beckprisma 17 gelangendes Licht mit einer seitlichen Versetzung in sich zurückreflektiert wird. Die Ausdehnung des Beckprismas 17 senkrecht zur optischen Achse 22 ist deutlich kleiner als der Radius der Frontlinse 16, so daß das Sendelicht vom Kondensor 10 bzw. dem Strahlenteiler 24 den Mittenbereich des Frontobjektivs 16 ungehindert erreichen kann und radial außerhalb des Beckprismas 17 noch durch die Frontlinse 16 hindurchgetretenes Licht am Beckprisma 17 vorbei zu einer Lichtempfangsanordnung 14 gelangen kann. Die Längsachse der Lichtauftreff-Schmalseite des Beckprismas 17 verläuft parallel zum entsprechenden Radius der Frontlinse 16.

Der Keil 18 befindet sich dem Beckprisma 17 diametral gegenüberliegend in der unteren Hälfte des Objektivs 16. Der optische Keil 18 läuft von radial außen nach radial innen sich verjüngend in der aus der

Zeichnung ersichtlichen Weise zusammen, so daß von der Meßstrecke 11 herkommendes Licht zur optischen Achse 22 hin abgelenkt wird.

Die Retroreflektoranordnung 13 besteht aus einem einzigen Tripelreflektor 20, welcher eine entsprechend der Bündelhöhe dimensionierte Lichteintrittsfläche aufweist, die sich senkrecht zur optischen Achse 22 über das gesamte Lichtbündel erstreckt. Vor dem Tripelreflektor 20, welcher das eintretende Licht wieder symmetrisch zur optischen Achse 22 versetzt, ansonsten aber in sich selbst zurückwirft, befindet sich eine Linsenanordnung 21, deren Brennpunkt im Frontobjektiv 16 liegt. Wesentlich ist, daß die Linsenanordnung 21 aus zwei Halblinsen 21a, 21b besteht, welche senkrecht zur optischen Achse 22 einen Abstand A/2 aufweisen. Die optischen Achsen 22a bzw. 22b der beiden Halblinsen 21a, 21b sind also gegenüber der optischen Hauptachse 22 seitlich in der aus der Zeichnung ersichtlichen Weise versetzt.

Auf der von der Frontlinsenanordnung 12 abgewandten Seite des Strahlenteilers 24 befindet sich eine Lichtempfangsanordnung 14, die aus einer das Licht konzentrierenden Linse 25 und einem Photoempfänger 19 besteht, der an eine elektronische Auswerteschaltung 15 angeschlossen ist, die ein Anzeigeinstrument 26 für die optische Transmission oder Extinktion aufweist.

Zwischen dem Strahlenteiler 24 und der Lichtempfangsanordnung 14 ist senkrecht zum Empfangslichtbündel eine Sektorenblende 27 angeordnet, welche um eine parallel zur optischen Achse 22 verlaufende Drehachse 28 schrittweise oder kontinuierlich drehbar ist, wobei die Ausbildung der Sektorenblende 27 so ist, daß sie entweder die obere Hälfte oder die untere Hälfte des Empfangslichtbündels abdeckt bzw. zur Lichtempfangsanordnung 14 durchläßt. Durch eine gestrichelte Linie 29 ist angedeutet, daß die elektronische Auswerteschaltung 15 mit der Sektorenblende 27 synchronisiert ist, so daß die elektronische Auswerteschaltung 15 jederzeit feststellen kann, ob der Photoempfänger 19 den oberen Teil oder den unteren Teil des Empfangslichtbündels empfängt.

Die Wirkungsweise des erfindungsgemäßen optischen Transmissionsmeßgerätes ist wie folgt :

Der Kondensor 10 bildet die Wendel der Lampe 23 in der Mitte des Objektivs 16 ab. Das oberhalb der optischen Achse 22 verlaufende Teilbündel mit dem Randstrahl I wird durch die Meßreflektoranordnung 13 auf die diametral entgegengesetzte Seite der optischen Achse 22 versetzt, so daß ein durch die Meßstrecke 11 reflektiertes Bündel mit dem unteren Randstrahl II entsteht. Wegen des Abstandes A der beiden Halblinsen 21a, 21b entsteht auf diese Weise ein Bild der Lichtquelle an der Stelle 30 seitlich neben dem Bild 31 das der Kondensor 10 in dem Frontobjektiv 16 entwirft. Das Licht des Teilbündels II wird nun über die untere Hälfte des Objektivs 16 und den optischen Keil 18 sowie die Linse 25 auf den Photoempfänger 19 konzentriert, sofern sich die Sektorenblende 27 in der aus der Zeichnung ersichtlichen Position befindet.

Das durch das Frontobjektiv 16 in die Hälfte unterhalb der optischen Achse 22 geworfene Licht mit dem Randstrahl 1 wird in ganz analoger Weise durch die Meßreflektoranordnung 13 symmetrisch in die obere Hälfte des Strahlenganges oberhalb der optischen Achse 22 versetzt, wo ein zurückreflektiertes Bündel mit dem Randstrahl 2 entsteht, welches auf dem Frontobjektiv 16 bei 32 neben dem ursprünglichen Bild 31 und symmetrisch zu dem Bild 30 ein weiteres Bild 32 der Lichtquelle entworfen wird. Das Lichtbündel 2 gelangt dann in das Beckprisma 17 und wird von diesem nach seitlicher Versetzung radial nach außen in sich als Lichtbündel 3 wieder zur Meßreflektoranordnung 13 reflektiert, welche nach abermaliger seitlicher Versetzung das reflektierte Bündel 4 erzeugt, welches ebenfalls in das Beckprisma 17 in der aus der Zeichnung ersichtlichen Weise eintritt und als Bündel 5 erneut zur Meßreflektoranordnung 13 reflektiert wird. Nunmehr wird das Bündel so seitlich versetzt, daß es als Lichtbündel 6 in die radial äußeren Zonen des Frontobjektivs 16 eintritt, so daß es in der aus der Zeichnung ersichtlichen Weise am Beckprisma 17 vorbei zur Linse 25 und damit zum Photoempfänger 19 gelangen kann, sofern sich die Sektorenblende 27 in einer gegenüber der Zeichnung um 180° verdrehten Position befindet.

Beim Umlaufen der Sektorenblende 27 wird also auf dem Photoempfänger 19 abwechselnd ein Lichtbündel II, welches die Meßstrecke 11 zweimal durchlaufen hat und ein Lichtbündel 6, welches die Meßstrecke sechsmal durchlaufen hat, konzentriert.

In der elektronischen Auswerteschaltung 15 kann nun eine elektronische Verknüpfung der beiden Empfangssignale des Photoempfängers 19 vorgenommen werden, wie sich aus den folgenden Überlegungen ergibt :

Nach dem Lambert-Beerschen Gesetz besteht folgender Zusammenhang :

$$I/I_0 = e^{-a} \quad (1)$$

Dabei bedeuten :

a = c . x. s

c = Extinktionskoeffizient, der von der Dichte der Staubteilchen, Korngröße und Kornform abhängt

s = Staubgehalt

x = Länge der optischen Meßstrecke

$I_0$ = Ausgesandtes Licht

I = Empfangenes Licht.

Wenn man nun erfindungsgemäß das Licht mit einer Umschaltfrequenz von z. B. einigen Hertz

zunächst zweimal durch Meßstrecke 11 laufen läßt, was der normalen Autokollimation entspricht, und dann vierfach oder sechsfach über die Meßstrecke 11 führt, können die folgenden Beziehungen aufgestellt werden :

$$I_1/I_0 = e^{-a} \quad \text{oder} \quad I_1 = I_0 \cdot e^{-a} \qquad (2)$$

$$I_2/I_0 = e^{-2a} \quad \text{oder} \quad I_2 = I_0 \cdot e^{-2a} \qquad (3)$$

$$I_3/I_0 = e^{-3a} \quad \text{oder} \quad I_3 = I_0 \cdot e^{-3a} \qquad (4)$$

$$I_3/I_1 = e^{-2a} \qquad (5)$$

Dabei bedeuten :

$I_1$ = Empfangenes Licht bei zweifachem Durchlaufen der Meßstrecke 11
$I_2$ = Empfangenes Licht bei vierfachem Durchlauf der Meßstrecke 11
$I_3$ = Empfangenes Licht bei sechsfachem Durchlauf der Meßstrecke 11.

Indem man nun beispielweise in der elektronischen Auswerteschaltung 15 den Quotienten $I_3/I_1$ oder auch $I_2/I_1$ bildet, eliminiert man die Größe $I_0$, welche nach den bisherigen Methoden durch den Nullpunktreflektor gewonnen werden mußte. Als eigentliche Referenz dient somit die Meßgröße $I_1$, die von der Meßreflektoranordnung 13 mitbestimmt wird. Der Nullpunktreflektor und die Innenreferenz können damit entfallen.

Das Problem der homogenen Überstrahlung der Meßreflektoranordnung 13 ist nun ebenfalls nicht mehr relevant, weil für den Referenzyklus (Zweifachmeßstrecke) und den Meßzyklus (Vierfach-bzw. Sechsfachmeßstrecke) derselbe Ausschnitt der Licht-Sendekeule verwendet wird.

Die Sektorenblende 27 ist erfindungsgemäß so ausgelegt, daß entweder das sechsfach oder das zweifach durch die Meßstrecke 11 gelaufende Strahlenbündel zur Lichtempfangsanordnung 14 gelangt. Je nach dem, wie schnell sich die Sektorenblende dreht, erfolgt eine mehr oder weniger schnelle Umschaltung von dem Zwei- auf den Sechsfachstrahlengang und umgekehrt.

Der wesentliche Vorteil des erfindungsgemäßen Systems besteht darin, daß für den Zweifach- und den Sechsfachstrahlengang immer der gleiche Lichtausschnitt aus der Sendekeule durch den Reflektor 13 ausgenützt wird. Aus diesem Grunde ist die Homogenität innerhalb der Sendekeule nicht mehr kritisch.

Ein weiterer Vorteil besteht darin, daß nach diesem Verfahren ein Abgleich auf rauchfreier Strecke, der bisher den Abbau von Optikkopf und Reflektor erforderlich machte, entfallen kann.

Für die Zwecke der Erfindung können auch verschiedene Strahlengänge der Anordnung nach der DE-A-25 08 860 herangezogen werden. So kann man z. B. den Strahlengang nach Fig. 1 dieser Patentschrift verwenden, indem man hinter dem Bild 12' der Lichtquelle 12 den Photoempfänger für den Zweifach-Strahlengang anordnet. Fig. 1 der DE-A-25 08 860 zeigt auch, wie man die Bilder 12' der Lichtquelle durch Keile 18, 18' seitlich versetzen kann.

**Patentansprüche**

1. Optisches Transmissionsmeßgerät, insbesondere zur Rauchdichte- oder Sichtweitemessung, mit einer Lichtquelle, einer dahinter befindlichen Frontlinsenanordnung, welche ein Lichtbündel durch eine Meßstrecke lenkt, einen am anderen Ende der Meßstrecke angeordneten Reflektor, welcher das Lichtbündel zur Frontlinsenanordnung zurückführt, Mitteln zum mehrfachen Hin- und Herführen von Licht zwischen der Frontlinsenanordnung und dem Reflektor und einer Lichtempfangsanordnung, auf der über die Frontlinsenanordnung von der Meßstrecke kommendes Licht konzentriert wird und die ein dem auftreffenden Licht entsprechendes elektrisches Signal an eine elektronische Auswerteschaltung (15) abgibt, dadurch gekennzeichnet, daß Reflexions- und Abbildungsmittel (17, 20, 21) vorgesehen sind, die bewirken, daß das von der Frontlinsenanordnung (12) ausgehende Licht in zumindest zwei Teilbündel (II ; 2, 3, 4, 5, 6) unterteilt ist, welche die Meßstrecke (11) zwischen der Frontlinsenanordnung (12) und dem Reflektor (13) unterschiedlich oft durchlaufen, bevor sie die Lichtempfangsanordnung (14) erreichen, und daß die von den beiden Teilbündeln herrührenden, entsprechenden elektrischen Ausgangssignale der Lichtempfangsanordnung (14) der elektronischen Auswerteschaltung (15) zugeführt sind, welche die beiden Signale durch Quotientenbildung so verknüpft, daß das nicht durch Änderungen der Transmission auf der Meßstrecke (11) hervorgerufene Driften eliminiert ist.

2. Meßgerät nach Anspruch 1, dadurch gekennzeichnet, daß sowohl einmal am Reflektor (13) reflektiertes Licht als auch ein- oder mehrfach, insbesondere sechsfach zwischen der Frontlinsenanordnung (12) und dem Reflektor (13) hin- und herlaufendes Licht durch die Frontlinsenanordnung (12) auf die Lichtempfangsanordnung (14) gelenkt ist.

3. Meßgerät nach Anspruch 1 oder 2, dadurch gekennzeichnet, daß die Frontlinsenanordnung ein Objektiv (16) aufweist, dem das Reflexionsmittel (17) zum teilweisen Zurückreflektieren von von der Meßstrecke (11) kommenden Licht zugeordnet ist.

4. Meßgerät nach Anspruch 3, dadurch gekennzeichnet, daß das Reflexionsmittel (17) neben der optischen Achse (22) des Objektivs (16) angeordnet ist, sich jedoch nicht bis zum Rand des Objektivs (16) erstreckt, so daß dort das mehrfach, insbesondere sechsfach, durch die Meßstrecke (11) gelaufene Lichtbündel (6) durch das Objektiv (16) zur Lichtempfangsanordnung (14) hindurchtreten kann.

5. Meßgerät nach Anspruch 3 oder 4, dadurch gekennzeichnet, daß das Reflexionsmittel ein Retroreflektor, insbesondere ein Beckprisma (17) ist.

6. Meßgerät nach einem der vorhergehenden Ansprüche, dadurch gekennzeichnet, daß die Lichtempfangsanordnung (14) zwei Photoempfänger aufweist, von denen jeder eines der Teilbündel (II ; 6) empfängt.

7. Meßgerät nach einem der Ansprüche 1 bis 5, dadurch gekennzeichnet, daß beide Teilbündel (II ; 6) zeitlich nacheinander abwechselnd auf einen einzigen Photoempfänger (19) fallen.

8. Meßgerät nach Anspruch 4 oder 5 und 7, dadurch gekennzeichnet, daß der anderen Hälfte des Objektivs (16) erste Lichtablenkmittel (18), insbesondere ein optischer Keil, zugeordnet sind, welche dem einfach reflektierten Lichtbündel (II) eine Ablenkung vermitteln, die die Versetzung des mehrfach reflektierten Teilbündels (6) kompensiert.

9. Meßgerät nach einem der vorhergehenden Ansprüche, dadurch gekennzeichnet, daß der Reflektor (13) aus einem das gesamte Meßlicht erfassenden Retroreflexionselement (20), einer davor angeordneten Linse (21), deren Brennpunkt sich im Bereich der Frontlinsenanordnung (12) befindet, und zweiten Lichtablenkmitteln besteht, welche die von beiden Teilbündeln (II ; 2) auf der Frontlinsenanordnung (12) entworfenen Bilder trennen.

10. Meßgerät nach Anspruch 9, dadurch gekennzeichnet, daß die zweiten Lichtablenkmittel durch Anordnung zweier Halblinsen (21a, 21b) in einem Abstand (A) voneinander verwirklicht sind.

## Claims

1. Optical transmission measuring apparatus in particular for smoke density or visibility range measurement, the apparatus comprising a light source, a front lens arrangement disposed after the light source which directs a light beam along the measurement path, a reflector arranged at the other end of the measurement path which guides the light beam back to the front lens arrangement, means for multiple to and fro guidance of the light between the front lens arrangement and the reflector, and a light receiving arrangement onto which light coming via the front lens arrangement from the measurement path is concentrated and which transmits an electrical signal corresponding to the incident light to an electronic evaluation circuit (15), characterized in that reflection and image forming means (17, 20, 21) are provided which cause the light emerging from the front lens arrangement (12) to be subdivided into at least two partial beams (II ; 2, 3, 4, 5, 6) which pass along the measurement path (11) between the front lens arrangement (12) and the reflector (13) a different number of times before they reach the light receiving arrangement (14) ; and in that the corresponding electrical output signals of the light receiving arrangement (14) originating from the two partial beams are passed to the electronic processing circuit (15) which so links the two signals by quotient formation that the drifting which is not produced by changes of the transmissivity on the measurement path (11) is eliminated.

2. Measuring apparatus in accordance with claim 1, characterized in that both light which is reflected once at the reflector (13) and also light which passes to and fro once, or multiply, in particular six times, between the front lens arrangement (12) and the reflector (13) is directed by the front lens arrangement (12) onto the light receiving arrangement (14).

3. Measuring apparatus in accordance with claim 1 or claim 2, characterized in that the front lens arrangement has an objective (16) with which reflection means (17) is associated for partially reflecting back light which comes from the measurement path (12).

4. Measuring apparatus in accordance with claim 3, characterized in that the reflection means (17) is arranged alongside the optical axis (22) of the objective (16), does not however extend up to the edge of the objective (16), so that there the light beam (6) which has passed multiply, and in particular six times, along the measurement path (11) can pass through the objective (16) to the light receiving arrangement (14).

5. Measuring apparatus in accordance with claim 3 or claim 4, characterized in that the reflection means is a retroreflector, in particular a Beck prism (17).

6. Measuring apparatus in accordance with one of the preceding claims, characterized in that the light receiving arrangement (14) has two photo-receivers of which each receives one of the partial beams (II ; 6).

7. Measuring apparatus in accordance with one of the claims 1 to 4, characterized in that the two partial beams (II ; 6) fall temporally after one another, alternately, on a single photo-receiver (19).

8. Measuring apparatus in accordance with claim 4 or 5 and 7, characterized in that first light deflecting means (18), in particular an optical wedge, are associated with the other half of the objective (16) and give the singly reflected light beam (II) a deflection which compensates for the displacement of the multiply reflected partial beam (6).

9. Measuring apparatus in accordance with one of the preceding claims, characterized in that the

reflector (13) comprises a retroreflection element (20) which picks up the entire measurement light, a lens (21) arranged in front of the retroreflection element with its focal point being located in the region of the front lens arrangement (12) and second light deflecting means which separate the images developed on the front lens arrangement (12) by the two partial beams (II ; 2).

10. Measuring apparatus in accordance with claim 9, characterized in that the second light deflecting means is realized by arranging two half lenses (21a, 21b) at a distance (A) from one another.

**Revendications**

1. Appareil optique de mesure de transmission, en particulier pour la mesure de la densité de la fumée ou de l'étendue de la visibilité, comprenant une source de lumière, un dispositif à lentilles frontales se trouvant en arrière et qui dirige un faisceau lumineux sur un trajet de mesure, un réflecteur disposé à l'autre extrémité du trajet de mesure et qui renvoie le faisceau lumineux vers le dispositif à lentilles frontales, des moyens pour guider plusieurs fois en va-et-vient la lumière entre le dispositif à lentilles frontales la lumière venant du trajet de mesure et qui délivre à un circuit électronique d'évaluation (15) un signal électrique correspondant à la lumière incidente, caractérisé en ce que des moyens de réflexion et de représentation (17, 20, 21) sont prévus, ceux-ci faisant en sorte que la lumière sortant du dispositif à lentilles frontales (12) soit subdivisée en au moins deux faisceaux partiels (II ; 2, 3, 4, 5, 6) qui parcourent selon une occurrence différente le trajet de mesure (11) entre le dispositif à lentilles frontales (12) et le réflecteur (13) avant d'atteindre le dispositif de réception de lumière (14), et en ce que les signaux électriques de sortie correspondants, en provenance des deux faisceaux partiels, du dispositif de réception de lumière (14) sont appliqués au circuit électronique d'évaluation (15) qui combine de telle manière les deux signaux par formation de quotients, que la dérive non provoquée par des variations de la transmission sur le trajet de mesure (11) est éliminée.

2. Appareil de mesure selon la revendication 1, caractérisé en ce que la lumière réfléchie une fois sur le réflecteur (13), ainsi que la lumière se déplaçant en va-et-vient une ou plusieurs fois, en particulier six fois entre le dispositif à lentilles frontales (12) et le réflecteur (13) sont dirigées par le dispositif à lentilles frontales (12) vers le dispositif de réception de lumière (14).

3. Appareil de mesure selon la revendication 1 ou la revendication 2, caractérisé en ce que le dispositif à lentilles frontales présente un objectif (16) auquel est associé le moyen de réflexion (17) pour une réflexion en retour partielle de la lumière en provenance du trajet de mesure (11).

4. Appareil de mesure selon la revendication 3, caractérisé en ce que le moyen de réflexion (17) est disposé près de l'axe optique (22) de l'objectif (16), ne s'étend pas cependant jusqu'au bord de l'objectif (16) de sorte que le faisceau lumineux (6) ayant passé plusieurs fois, en particulier six fois par le trajet de mesure (11) peut passer par l'objectif (16) vers le dispositif de réception de lumière (14).

5. Appareil de mesure selon la revendication 3 ou la revendication 4, caractérisé en ce que le moyen de réflexion est un rétroréflecteur, en particulier un prisme (17) de Beck.

6. Appareil de mesure selon l'une des revendications précédentes, caractérisé en ce que le dispositif de réception de lumière (14) présente deux photorécepteurs dont chacun reçoit un faisceau partiel (II ; 6).

7. Appareil de mesure selon l'une des revendications 1 à 5, caractérisé en ce que les deux faisceaux partiels (II ; 6) tombent l'un après l'autre alternativement sur un seul photorécepteur (19).

8. Appareil de mesure selon la revendication 4 ou les revendications 5 et 7, caractérisé en ce que l'autre moitié de l'objectif (16) est associée à des premiers moyens de réflexion de la lumière (18), en particulier un coin optique, lesquels provoquent sur le faisceau lumineux (II) réfléchi une fois une déflexion qui compense l'écart du faisceau partiel (6) réfléchi plusieurs fois.

9. Appareil de mesure selon l'une des revendications précédentes, caractérisé en ce que le réflecteur (13) est constitué par un élément de rétroréflexion (20) englobant toute la lumière de mesure, une lentille (21) disposée devant, dont le foyer se trouve au voisinage du dispositif à lentilles frontales (12) et par des deuxièmes moyens de déflexion de lumière qui séparent les images créées par les deux faisceaux partiels (II ; 2) sur le dispositif à lentilles frontales (12).

10. Appareil de mesure selon la revendication 9, caractérisé en ce que les deuxièmes moyens de déflexion de lumière sont réalisés par l'agencement de deux demi-lentilles (21a, 21b) à une certaine distance (A) l'une de l'autre.

0 119 618

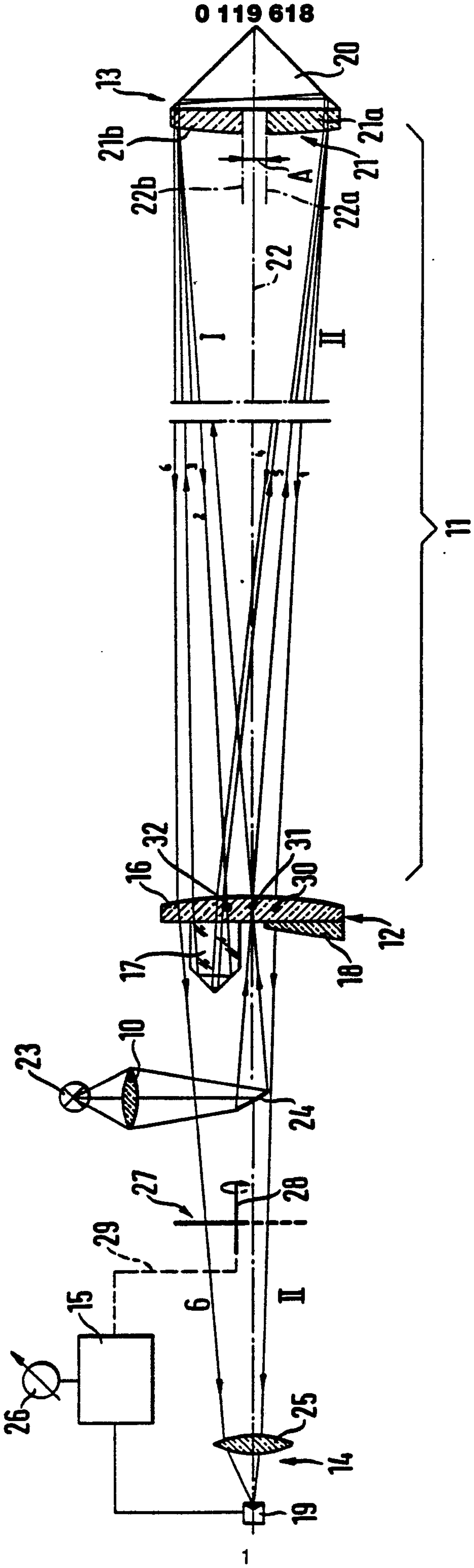
13
20
21b
21a
21
A
22b
22a
22
I
II
11
16
32
31
30
17
12
18
23
10
24
27
28
29
15
6
II
26
25
14
19

1